# EUROPÄISCHE PATENTANMELDUNG

(11) **EP 3 562 016 A1**
(43) Veröffentlichungstag der Anmeldung: **30.10.2019**
(21) Anmeldenummer: 18168829.2
(22) Anmeldetag: 23.04.2018
(51) Int. Cl.: H02M 1/36, H02M 7/5375, H02M 7/487

(54) **VORLADUNG EINES ZWISCHENKREISES**

(71) Anmelder: FRONIUS INTERNATIONAL GmbH, 4643 Pettenbach (AT)
(72) Erfinder: Danmayr, Joachim, 4542 Nußbach (AT); Jungreithmair, Roland, 4653 Eberstalzell (AT)
(74) Vertreter: Patentanwälte Pinter & Weiss OG

(57) **Zusammenfassung**

Um eine zuverlässige Ladung der Zwischenkreiskondensatoren eines Wechselrichters (1), der einen Zwischenkreis (3), eine Gleichspannungs/Wechselspannungs-Brücke (3) und eine Steuereinheit (5) umfasst, zu ermöglichen, wird erfindungsgemäß in einem Vorladebetrieb eine Zwischenkreisspannung (Uz) des Zwischenkreises (3) über eine kapazitive Schaltung (C), vorzugsweise einen kapazitiven Spannungsteiler, über ein mit dem Ausgang verbundenes Energieversorgungsnetz (4) vorgeladen.

## Beschreibung

Die gegenständliche Erfindung betrifft ein Verfahren zum Betreiben eines Wechselrichters welcher einen Zwischenkreis, eine Gleichspannungs/Wechselspannungs-Brücke und eine Steuereinheit umfasst, wobei von der Steuereinheit Halbbrücken der Gleichspannungs/Wechselspannungs-Brücke angesteuert werden um in einem Normalbetrieb eine Eingangs-Gleichspannung einer Gleichspannungsseite über den Zwischenkreis und die Gleichspannungs/Wechselspannungs-Brücke in eine Ausgangs-Wechselspannung zu wandeln, wobei der Wechselrichter vor einer Aktivierung des Normalbetriebs in einen Vorladebetrieb geschaltet wird, bei dem eine Zwischenkreisspannung des Zwischenkreises auf eine vorgegebene Vorspannung vorgeladen wird. Weiters betrifft die gegenständliche Erfindung einen Wechselrichter umfassend einen Zwischenkreis, eine Gleichspannungs/Wechselspannungs-Brücke und eine Steuereinheit, wobei die Steuereinheit ausgestaltet ist Halbbrücken der Gleichspannungs/Wechselspannungs-Brücke anzusteuern um in einem Normalbetrieb eine Eingangs-Gleichspannung einer Gleichspannungs-Eingangsstufe über den Zwischenkreis und die Gleichspannungs/Wechselspannungs-Brücke in eine Ausgangs-Wechselspannung zu wandeln.

Ein typischer Wechselrichter wandelt eine Eingangs-Gleichspannung in eine Ausgangs-Wechselspannung und verbindet somit eine an einem Eingang anliegende Gleichspannungsquelle über eine Gleichspannungs-Eingangsstufe und eine Gleichspannungs/Wechselspannungs-Brücke am Ausgang mit einem Wechselspannungsnetz, z.B. einem n-phasigen Energieversorgungsnetz. So kann eine n-phasige Ausgangs-Wechselspannung in n Netzspannungen des Energieversorgungsnetzes eingespeist werden. Die Gleichspannungs/Wechselspannungs-Brücke ist üblicherweise durch je zwei Halbbrücken pro Phase des Energieversorgungsnetzes gebildet, wobei eine Halbbrücke jeweils zwei Leistungsschalter, z.B. IGBTs oder MOSFETs umfasst. Pro Phase dient eine erste Halbbrücke für die Bereitstellung der positiven Halbwellen der Wechselspannung und eine zweite Halbbrücke für die Bereitstellung der negativen Halbwellen. Zwischen Gleichspannungs-Eingangsstufe und Gleichspannungs/Wechselspannungs-Brücke ist üblicherweise ein Zwischenkreis, welcher aus Zwischenkreiskondensatoren gebildet ist, vorgesehen. Als Gleichspannungsquelle kann beispielsweise eine Photovoltaik-Anlage im Generatorbetrieb dienen. Ausgangsseitig, also vor dem Wechselspannungsnetz, kann im Wechselrichter noch ein Filter vorgesehen sein. Ebenso können zwischen Wechselrichter und Wechselspannungsnetz noch Schaltelemente, beispielswiese Relais, und/oder weitere Filter, beispielsweise ein EMC Filter, vorgesehen sein.

Im Normalbetrieb ist der Wechselrichter somit konzipiert um Energie von einer am Eingang befindlichen Gleichspannungsquelle an den Ausgang abzugeben und somit in ein Wechselspannungsnetz einzuspeisen. Vor der Aufnahme des Normalbetriebs des Wechselrichters, müssen jedoch die im Zwischenkreis verbauten Zwischenkreiskondensatoren auf eine Vorspannung vorgeladen werden. Würde der Wechselrichter ohne vorgeladenen Zwischenkreis direkt mit dem am Ausgang befindlichen Energieversorgungsnetz verbunden werden, würden sich die Zwischenkreiskondensatoren von der Ausgangsseite her über die parasitären Dioden der Leistungsschalter in den Halbbrücken der Gleichspannungs/Wechselspannungs-Brücke laden. Da der Zwischenkreis im entladenen Zustand eine sehr niederohmige Last darstellt können dabei entstehende Ströme derart hoch sein, dass die Komponenten des Wechselrichters, insbesondere die Leistungsschalter, Schaden nehmen können. Das Vorladen der Zwischenkreiskondensatoren auf die Vorspannung muss also durchgeführt werden, bevor die Leistungsschalter der Gleichspannungs/Wechselspannungs-Brücke im Normalbetreib mit dem Energieversorgungsnetz verbunden werden.

Bekannte Lösungen zum Vorladen der Zwischenkreiskondensatoren umfassen eine Verwendung der an der Gleichspannungs-Eingangsstufe zur Verfügung stehenden Energie. Diese Energie kann zur Verfügung gestellt werden, indem beispielsweise eine geeignete Auslegung der Komponenten der Gleichspannungsquelle, die mit der Gleichspannungs-Eingangsstufe verbunden sind, erfolgt. So werden beispielsweise Photovoltaikzellen in Serie geschaltet um eine ausreichend hohe Eingangs-Gleichspannung zu erreichen, welche dann als Zwischenkreisspannung an den Zwischenkreiskondensatoren anliegt und diese vorlädt. Insbesondere bei Photovoltaikzellen kann aber das Problem auftreten, dass keine oder keine ausreichende Eingangs-Gleichspannung erzeugt wird, womit auch keine Vorladung möglich wäre.

Ist die zur Verfügung stehende Eingangs-Gleichspannung nicht ausreichend hoch, so kann diese unter Verwendung von am Wechselrichter zusätzlich angebrachten Aufwärtswandlern erhöht werden, um eine ausreichend hohe Zwischenkreisspannung zu erzeugen. Die DE 10 2010 060 633 A1 offenbart eine Vorladung des Zwischenkreises eines Wechselrichters durch Kopplung mit der Gleichspannungs-Eingangsseite, wobei die Zwischenkreiskondensatoren in einem ersten Schritt ohne zusätzliche Beschaltung auf einen hohen Wert vorgeladen werden. Daraufhin wird die Gleichspannungs-Eingangsseite weggeschaltet und die Spannung sinkt auf einen Wert, der in etwa der gewünschten Zwischenkreisspannung entspricht. Die Zwischenkreisspannung wird in einem folgenden Schritt auf den gewünschten Wert eingestellt, indem der Wechselrichter in einem Hochsetzstellerbetrieb betrieben wird. Damit kann eine ausreichende Zwischenkreisspannung erreicht werden ohne einen zusätzlichen Wechselrichter vorzusehen. Nachteiligerweise funktioniert dieses Verfahren jedoch nur, wenn im ersten Schritt eine Eingangs-Gleichspannung am Eingang anliegt, was eine Sonneneinstrahlung bedingt. Somit ist eine zuverlässige Vorladung nur bei Sonnenschein möglich. Zudem muss die Eingangs-Gleichspannung ausreichend sein, um annähernd die gewünschte Zwischenkreisspannung zu erreichen, da die Halbleiterschalter der Wechselrichters ansonsten bei einer zu geringen Zwischenkreisspannung zu Beginn des Hochsetzstellerbetriebs aufgrund der zu geringen Impedanz und damit verbundenen hohen Stromflüssen abermals Schaden nehmen können.

Es können zum Vorladen der Zwischenkreiskondensatoren auch externe Stromspeicher, z.B. Akkus, verwendet werden, insbesondere wenn gar keine Gleichspannungsquellen vorhanden sind, beispielsweise wenn Wechselrichter zur Kopplung von Wechselspannungsnetzen zur Blindleistungskompensation verwendet werden. Eine Verwendung externer Stromspeicher zum Laden der Zwischenkreiskondensatoren birgt jedoch die Gefahr, dass ein Vorladen nicht möglich ist, da er jeweilige Stromspeicher vollständig entladen sein kann oder sich beispielsweise im Standby-Betreib befinden kann. Damit ist ebenso keine zuverlässige Vorladung möglich. Abgesehen davon bedeutet ein zusätzlicher Stromspeicher natürlich mehr Aufwand und Kosten.

Es ist eine Aufgabe der gegenständlichen Erfindung eine zuverlässige Ladung der Zwischenkreiskondensatoren eines Wechselrichters zu ermöglichen.

Diese Aufgabe wird erfindungsgemäß gelöst, indem im Vorladebetrieb die Zwischenkreisspannung über eine kapazitive Schaltung, vorteilhafterweise einen kapazitiven Spannungsteiler über ein mit dem Ausgang verbundenes Energieversorgungsnetz vorgeladen wird. Ebenso wird die Aufgabe durch eine kapazitive Schaltung, vorzugsweise einen kapazitiven Spannungsteiler gelöst, über die der Zwischenkreis in einem Vorladebetrieb mit einem mit dem Ausgang verbundenes Energieversorgungsnetz verbindbar ist, um eine Zwischenkreisspannung des Zwischenkreises vorzuladen. So kann erfindungsgemäß die für die Vorladung notwendige Energie vom Energieversorgungsnetz bezogen werden, und es ist keine Abhängigkeit von einer eingangsseitigen oder zusätzlich vorgesehenen Gleichspannungsquelle gegeben. Als kapazitive Schaltung kann beispielsweise eine externe Beschaltung mit geeigneten Kondensatoren, dienen. Die kapazitive Schaltung dient als strombegrenzender Vorwiderstand und kann beispielsweise die n Phasen des Energieversorgungsnetzes, die mit dem Ausgang des Wechselrichters verbunden sind, mit dem Zwischenkreis verbinden.

Vorteilhafterweise dienen ausgangsseitige Taktfilter und Netzfilter als kapazitive Schaltung. Taktfilter und Netzfilter umfassen in der Regel jeweils in Stern zwischen die Phasen geschaltete Taktfilterkondensatoren und Netzfilterkondensatoren, welche einen strombegrenzenden kapazitiven Spannungsteiler bilden, über welchen die Zwischenkreiskondensatoren über eine Ladekurve geladen werden. Ohne eine Strombegrenzung könnten, wie eingangs erwähnt, beim Verbinden des Energieversorgungsnetzes mit der Gleichspannungs/Wechselspannungs-Brücke Bauteile, insbesondere Leistungsschalter, beschädigt oder zerstören werden, da die Zwischenkreiskondensatoren anfangs nicht ausreichend geladen sind. Unter Verwendung der ohnehin vorhandenen Taktfilter und Netzfilter werden die Zwischenkreiskondensatoren direkt, d.h. ohne zusätzliche, externe Bauteile oder Vorwiderstände über das Energieversorgungsnetz geladen. Es entsteht damit kein zusätzlicher Hardwareaufwand, womit auch die Gesamtgerätekosten des Wechselrichters sinken und in weiterer Folge ebenso die Lebensdauer erhöht werden kann, da weniger verbaute elektronische Bauteile auch eine geringere Ausfallwahrscheinlichkeit bedeuten. Taktfilter und/oder Netzfilter können natürlich auch keinen Bestandteil des Wechselrichters darstellen und stattdessen durch zugeschaltete Elemente gebildet werden. Es kann natürlich trotz Verwendung der Taktfilter und Netzfilter als kapazitive Schaltung auch eine weitere Beschaltung erfolgen, z.B. um die kapazitive Schaltung zu erweitern.

Vorteilhafterweise wird die Zwischenkreisspannung über die kapazitive Schaltung über das Energieversorgungsnetz auf eine Schwellspannung kleiner der Vorspannung vorgeladen und es werden anschließend Halbbrücken der Gleichspannungs/Wechselspannungs-Brücke von der Steuereinheit entsprechend eines Hochsetzstellers getaktet, um die Zwischenkreisspannung über das Energieversorgungsnetz weiter zu erhöhen, bis die vorgegebene Vorspannung erreicht wird.

Durch den Betrieb der Gleichspannungs/Wechselspannungs-Brücke als Hochsetzsteller, bzw. Aufwärtswandler, kann die Vorladung des Zwischenkreiskondensators über die bereits vorhandene Steuereinheit gesteuert werden, womit ein zusätzlicher Hardwareaufwand vermieden wird.

Die Schwellspannung kann vorteilhafterweise einen Wert knapp unter einer halben Scheitelspannung des Energieversorgungsnetzes entsprechen und kann durch eine Dimensionierung des Taktfilters und Netzfilters eingestellt werden. Die Schwellspannung kann üblicherweise die halbe Scheitelspannung nicht ganz erreichen, da durch die Vorladung über den kapazitiven Spannungsteiler auch nach einer längeren Ladezeit ein Spannungsabfall auftritt.

Vorteilhafterweise wird die Zwischenkreisspannung in einem ersten Schritt über die kapazitive Schaltung über eine Phase des Energieversorgungsnetzes vorgeladen und die Zwischenkreisspannung in einem Hochsetzstellerbetrieb über die kapazitive Schaltung über eine Phase des Energieversorgungsnetz weiter erhöht, wobei ganz besonders vorteilhafterweise jeweils dieselbe Phase verwendet wird.

Es können die Halbbrücken der Gleichspannungs/Wechselspannungs-Brücke auch von der Steuereinheit entsprechend eines Hochsetzstellers getaktet werden um die Zwischenkreisspannung über das Energieversorgungsnetz auf die vorgegebene Vorspannung vorzuladen. Damit ist kein vorhergehender erster Schritt umfassend ein Vorladen auf eine Schwellspannung notwendig und es kann sofort mit dem Hochsetzstellerbetrieb begonnen werden. Dies ist möglich, da die kapazitive Schaltung, über die die Gleichspannungs/Wechselspannungs-Brücke mit dem Energieversorgungsnetz verbunden ist, strombegrenzend wirkt. Ohne die kapazitive Schaltung oder eine andersartige Strombegrenzung würde ein Hochsetzstellerbetrieb bei ungeladenen Zwischenkreiskondensatoren zur Beschädigung von Bauteilen führen.

Zudem wird die Aufgabe erfindungsgemäß durch einen Wechselrichter umfassend einen Zwischenkreis, eine Gleichspannungs/Wechselspannungs-Brücke und eine Steuereinheit gelöst, wobei die Steuereinheit ausgestaltet ist Halbbrücken der Gleichspannungs/Wechselspannungs-Brücke anzusteuern um in einem Normalbetrieb eine Eingangs-Gleichspannung einer Gleichspannungs-Eingangsstufe über den Zwischenkreis und die Gleichspannungs/Wechselspannungs-Brücke in eine Ausgangs-Wechselspannung zu wandeln, wobei der Wechselrichter vor einer Aktivierung des Normalbetriebs in einen Vorladebetrieb nach dem erfindungsgemäßen Verfahren betrieben wird.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 einen schematisch dargestellten Wechselrichter,
Fig.2 einen Wechselrichter mit zwei Zwischenkreiskondensatoren im Normalbetrieb,
Fig.3 den Wechselrichter im Vorladebetrieb,Fig.4a eine effektive Schaltung für eine obere Halbwelle im ersten Schritt,
Fig.4b eine effektive Schaltung für eine untere Halbwelle im ersten Schritt,
Fig.5a eine effektive Schaltung für eine obere Halbwelle im Hochsetzstellerbetrieb,
Fig.5b eine effektive Schaltung für eine untere Halbwelle im Hochsetzstellerbetrieb,
Fig.6 einen Wechselrichter mit einem Zwischenkreiskondensatoren im Normalbetrieb,
Fig.7 den Wechselrichter im Vorladebetrieb,
Fig.8a eine effektive Schaltung für eine obere Halbwelle im ersten Schritt,
Fig.8b eine effektive Schaltung für eine untere Halbwelle im ersten Schritt,
Fig.9a die effektive Schaltung für eine obere Halbwelle im Hochsetzstellerbetrieb,
Fig.9b die effektive Schaltung für eine untere Halbwelle im Hochsetzstellerbetrieb,
Fig.10 den Verlauf einer Zwischenkreisspannung im Vorladebetrieb.

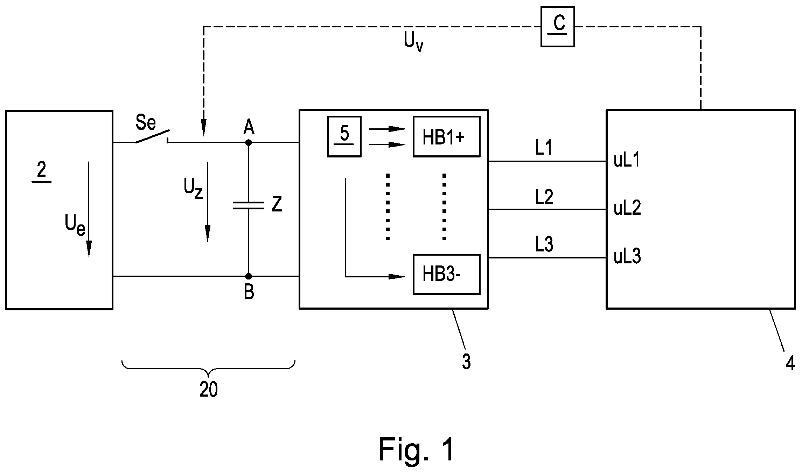

In Fig. 1 ist ein schematischer Wechselrichter 1 dargestellt, welcher eine Gleichspannungs-Eingangsstufe 20 über eine Gleichspannungs/Wechselspannungs-Brücke 3 mit einem Energieversorgungsnetz 4 verbindet. In der Gleichspannungs-Eingangsstufe 20 ist vor der Gleichspannungs/Wechselspannungs-Brücke 3 ein kapazitiver Zwischenkreis Z vorgesehen. Das Energieversorgungsnetz 4 weist n Phasen, hier n=3 Phasen L1, L2, L3, sowie einen Neutralleiter N (in Fig.1 nicht eingezeichnet) auf. Die Gleichspannungs-Eingangsstufe 20 ist über einen Eingangsschalter Se mit einer Gleichspannungsquelle 2, beispielsweise einer Photovoltaik-Anlage, verbunden und weist einen ersten Pol A und einen zweiten Pol B auf. Der erste Pol A und der zweite Pol B sind ebenso mit dem Zwischenkreis Z verbunden. Am Zwischenkreis Z, d.h. zwischen dem ersten Pol A und dem zweiten Pol B, liegt die Zwischenkreisspannung Uz an.

Die Gleichspannungs/Wechselspannungs-Brücke 3 umfasst eine obere Halbbrücke HB1+, HB2+, HB3+ und eine zugehörige untere Halbbrücke HB1-, HB2-, HB3- pro Phase L1, L2, L3. Für n=3 Phasen sind somit drei obere Halbbrücken HB1+, HB2+, HB3+ und drei untere Halbbrücken HB1-, HB2-, HB3- vorgesehen, in Fig. 1 nur angedeutet. Die Halbbrücken HB1+, HB2+, HB3+, HB1-, HB2-, HB3- werden im Normalbetrieb von einer Steuerschaltung 5 derart angesteuert, dass eine an der Gleichspannungs-Eingangsstufe 20 anliegende Eingangs-Gleichspannung Ue über den Zwischenkreis und die Gleichspannungs/Wechselspannungs-Brücke 3 in eine Ausgangs-Wechselspannung uL1, uL2, uL3 pro Phase L1, L2, L3 gewandelt wird. Die Ausgangs-Wechselspannungen uL1, uL2, uL3 werden dann im Normalbetrieb jeweils in die Netzspannungen U1, U2, U3 des Energieversorgungsnetzes 4 eingespeist. Erfindungsgemäß wird jedoch vor einer Aktivierung des Normalbetriebs in einen Vorladebetrieb geschaltet, bei dem die Zwischenkreisspannung Uz (die im Normalbetrieb der Eingangsspannung Ue entspricht) des Zwischenkreises über eine kapazitive Schaltung C über das Energieversorgungsnetz 4 auf eine vorgegebene Vorspannung Uv vorgeladen wird, wie in Fig. 1 durch den strichlierten Pfeil schematisch angedeutet ist.

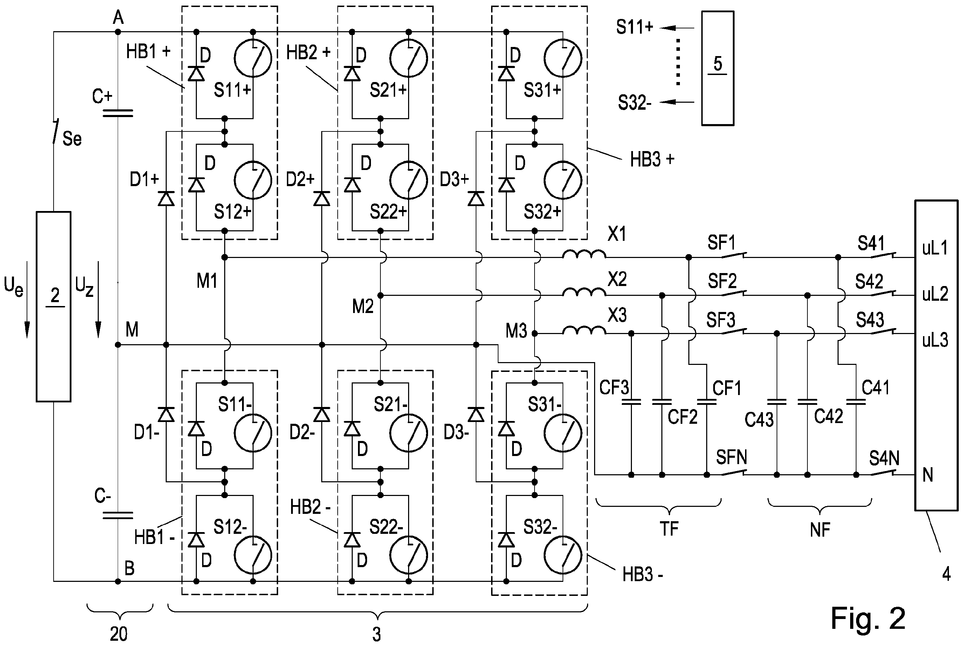

In Fig. 2 ist als erstes Ausführungsbeispiel eine erste mögliche Schaltungsanordnung des Wechselrichters 1 detaillierter dargestellt. Der Zwischenkreis Z der Gleichspannungs-Eingangsstufe 20 umfasst einen oberen Zwischenkreiskondensator C+ und einen in Serie geschalteten unteren Zwischenkreiskondensator C-. Der erste Pol A und der zweite Pol B verbindet die Serienschaltung der beiden Zwischenkreiskondensatoren C+, C-, wobei sich hier zwischen dem oberen Zwischenkreiskondensators C+ und dem unteren Zwischenkreiskondensators C- ein Zwischenkreis-Mittelpunkt M befindet. Der obere Zwischenkreiskondensator C+ und der untere Zwischenkreiskondensator C- bilden somit den Zwischenkreis Z, wobei natürlich auch weitere serielle und/oder parallele Kondensatoren im Zwischenkreis vorgesehen sein können. Es wird der erste Pol A jeweils über die obere Halbbrücke HB1+, HB2+, HB3+ und die in Serie geschaltete zugehörige untere Halbbrücke HB1-, HB2-, HB3-mit dem zweiten Pol B verbunden, womit die Zwischenkreisspannung Uz jeweils an der Serienschaltung der oberen Halbbrücken HB1+, HB2+, HB3+ und zugehörigen untere Halbbrücken HB1-, HB2-, HB3-jeder Phase n anliegt. Zwischen den oberen Halbbrücken HB1+, HB2+, HB3+ und zugehörigen unteren Halbbrücken HB1-, HB2-, HB3- befinden sich jeweils der erste, zweite, bzw. dritte Mittelpunkt M1, M2, M3.

Die oberen Halbbrücken HB1+, HB2+, HB3+ umfassen im hier dargestellten ersten Ausführungsbeispiel jeweils einen oberen Leistungsschalter S11+, S21+, S31+ und jeweils einen in Serie geschalteten unteren Leistungsschalter S12+, S22+, S32+, wobei sich zwischen den oberen Leistungsschaltern S11+, S21+, S31+ und den zugehörigen unteren Leistungsschaltern S12+, S22+, S32+ jeweils ein erster oberer Mittelpunkt M1+, zweiter oberer Mittelpunkt M2+, bzw. dritter oberer Mittelpunkt M3+ befindet. In den oberen Halbbrücken HB1+, HB2+, HB3+ sind parallel zu den oberen Leistungsschaltern S11+, S21+, S31+ und den unteren Leistungsschaltern S12+, S22+, S32+ jeweils Freilaufdioden D angeordnet, die in Richtung des ersten Pols A durchlässig gepolt sind. Der Zwischenkreis-Mittelpunkt M ist zudem über obere Dioden D1+, D2+, D3+ mit den oberen Mittelpunkten M1+, M2+, M3+ verbunden, die in Richtung der oberen Mittelpunkte M1+, M2+, M3+ durchlässig gepolt sind.

Die unteren Halbbrücken HB1-, HB2-, HB3- umfassen im hier dargestellten ersten Ausführungsbeispiel in analoger Weise einen oberen Leistungsschalter S11-, S21-, S31- und einen jeweils in Serie geschalteten unteren Leistungsschalter S12-, S22-, S32-, wobei sich zwischen den oberen Leistungsschaltern S11-, S21-, S31- und den zugehörigen unteren Leistungsschaltern S12-, S22-, S32-jeweils ein erster unterer Mittelpunkt M1-, zweiter unterer Mittelpunkt M2-, bzw. dritter unterer Mittelpunkt M3- befindet. Parallel zu den oberen Leistungsschaltern S11-, S21-, S31- und den unteren Leistungsschaltern S12-, S22-, S32- sind jeweils Freilaufdioden D angeordnet, in Richtung des zugehörigen ersten, zweiten, bzw. dritten Mittelpunkts M1, M2, M3, bzw. in Richtung des ersten Pols A durchlässig gepolt sind. Die unteren Mittelpunkte M1-, M2-, M3- sind über untere Dioden D1-, D2-, D3- mit dem Zwischenkreis-Mittelpunkt M verbunden, wobei die unteren Dioden D1-, D2-, D3- in Richtung des Zwischenkreis-Mittelpunkts M durchlässig gepolt sind. Die obere Dioden D1+, D2+, D3+ und untere Dioden D1-, D2-, D3- werden im Normalbetrieb des im ersten Ausführungsbeispiel dargestellten Wechselrichters 1 verwendet und damit bereits im Wechselrichter vorhanden. Zumindest die oberen Dioden D1+, D2+, D3+ und unteren Dioden D1-, D2-, D3-, die der Phase L1, L2, L3 zugehörig sind, über welche der Wechselrichters 1 im Vorladebetrieb mit dem Energieversorgungsnetz 4 verbunden wird, können somit auch im Betrieb des Wechselrichters 1 als Hochsetzsteller verwendet werden.

Das Energieversorgungsnetz umfasst eine Anzahl n Phasen L1, L2, L3, die jeweils eine phasenverschobene Netzspannung U1, U2, U3 (z.B. 230 Volt) mit einer Netzfrequenz f (z.B. 50 Hz) aufweisen. Die Ausgangs-Wechselspannung uL1, uL2, uL3 ist natürlich mit der Netzspannung U1, U2, U3 synchronisiert, um ein Einspeisen in das Energieversorgungsnetz 4 zu ermöglichen. Die erste Phase L1 des Energieversorgungsnetzes 4 ist vorzugsweise über eine erste Induktivität X1 (Drossel) mit dem ersten Mittelpunkt M1 verbunden. Analog ist die zweite Phase L2 es Energieversorgungsnetzes 4 vorzugsweise über eine zweite Induktivität X2 mit dem zweiten Mittelpunkt M2 verbunden und die dritte Phase L3 des Energieversorgungsnetzes 4 vorzugsweise über eine dritte Induktivität X3 mit dem dritten Mittelpunkt M3 verbunden. Die n=3 Phasen L1, L2, L3 sind zudem über einen Taktfilter TF miteinander verbunden. Der Taktfilter TF umfasst eine Sternschaltung von zumindest drei Taktfilterkapazitäten CF1, CF2, CF3, wobei der Sternpunkt des Taktfilters mit dem Neutralleiter N des Energieversorgungsnetzes verbunden ist. Weiters sind die n=3 Phasen L1, L2, L3 über einen Netzfilter NF (EMC-Filter) miteinander verbunden, welcher ähnlich dem Taktfilter TF wiederum aus einer Sternschaltung von zumindest drei Netzfilterkapazitäten C41, C42, C43 besteht, wobei der Sternpunkt mit dem Neutralleiter N des Energieversorgungsnetzes 4 verbunden ist. Taktfilter TF und Netzfilter NF müssen nicht Teil des Wechselrichters 1 sein, und können auch extern ausgestaltet sein. Die Taktfilter TF und Netzfilter NF werden im gegenständlichen Ausführungsbeispiel als kapazitive Beschaltungen C zum Vorladen der Zwischenkreisspannung Uz auf die Vorspannung Uv verwendet. Alternativ oder zusätzlich kann natürlich auch eine andere/weitere kapazitive Beschaltung C vorgesehen sein um einen kapazitiven Vorwiderstand zur Strombegrenzung während des Vorladens der Zwischenkreiskondensatoren C+, C- zu schaffen.

Der Wechselrichter 2 ist über die über die jeweils über einen in den Phasen L1, L2, L3 zwischen Taktfilter TF und Netzfilter NF vorgesehenen ersten, zweiten und dritten Phasen-Filter-Schalter SF1, SF2, SF3, sowie einen im Neutralleiter L zwischen Taktfilter TF und Netzfilter NF vorgesehenen Neutralleiter-Filter-Schalter SFN vom Versorgungsnetz 4 trennbar und zuschaltbar. Sind die Phasen-Filter-Schalter SF1, SF2, SF3, und der Neutralleiter-Filter-Schalter SFN geöffnet, so sind die Gleichspannungs/Wechselspannungs-Brücke 3 und damit der Wechselrichter vom Energieversorgungsnetz 4 getrennt.

Weiters sind zwischen dem Netzfilter NF und dem Energieversorgungsnetz 4 ein erster, zweiter, dritter Phasen-Schalter S41, S42, S43, sowie ein Neutralleiter-Schalter S4N vorgesehen, über welche das Netzfilter NF vom Energieversorgungsnetz 4 trennbar bzw. zuschaltbar ist. Sind die Phasen-Schalter S41, S42, S43, und der Neutralleiter-Schalter S4N geöffnet, so sind natürlich auch Taktfilter TF und damit auch die Gleichspannungs/Wechselspannungs-Brücke 3 vom Energieversorgungsnetz 4 getrennt.

Die oberen Leistungsschalter S11+, S21+, S31+ und unteren Leistungsschalter S12+, S22+, S32+ der oberen Halbbrücken HB1+, HB2+, HB3+, wie auch die oberen Leistungsschalter S11-, S21-, S31- und unteren Leistungsschalter S12-, S22-, S32- der unteren Halbbrücken HB1-, HB2-, HB3- sind weiter über eine Steuerschaltung 5 ansteuerbar, die aus Übersichtlichkeitsgründen in den Figuren nur angedeutet ist.

Da sich der Wechselrichter 1 in Fig. 2 im Normalbetrieb befindet, wobei der Eingangsschalter Se geschlossen ist, wirkt die Gleichspannungsquelle 2 an der Gleichspannungs-Eingangsstufe 20 als Generator und erzeugt eine Eingangs-Gleichspannung Ue zwischen dem ersten Pol A und dem zweiten Pol B, womit die Eingangs-Gleichspannung Ue der Zwischenkreisspannung Uz entspricht. Die Phasen-Filterschalter SF1, SF2, SF3, bzw. der Neutralleiter-Filterschalter SFN, die Phasen-Schalter S41, S42, S43, bzw. Neutralleiter-Schalter S4N sind geschlossen, womit die Gleichspannungs/Wechselspannungs-Brücke 3 mit dem Energieversorgungsnetz 4 verbunden ist. Eine Eingangs-Gleichspannung Ue entspricht der Zwischenkreisspannung Uz und liegt zwischen dem ersten Pol A und dem zweiten Pol B an. Die Steuerschaltung 5 schaltet die oberen Halbbrücken HB1+, HB2+, HB3+ derart, dass am ersten, zweiten und dritten Mittelpunkt M1, M2, M3 jeweils positive Halbwellen erzeugt werden. Die Steuerschaltung 5 schaltet in analoger Weise die unteren Halbbrücken HB1-, HB2-, HB3- derart, dass am ersten, zweiten und dritten Mittelpunkt M1, M2, M3 jeweils negative Halbwellen erzeugt werden. Dabei werden obere Halbbrücken HB1+, HB2+, HB3+ und zugehörige unteren Halbbrücken HB1-, HB2-, HB3-jeweils abwechselnd geschaltet. So entsteht am ersten, zweiten und dritten Mittelpunkt M1, M2, M3 jeweils eine phasenverschobene rechteckige Wechselspannung, welche über die Induktivitäten X1, X2, X3 geglättet wird und weiter in die zugehörigen Phasen L1, L2, L3 des Energieversorgungsnetzes 4 eingespeist wird. Diese positiven und negativen Halbwellen der erzeugen Spannungen müssen von der Steuerschaltung 5 natürlich an die Halbwellen der jeweils verbundenen Phasen L1, L2, L3 synchronisiert werden, um ein Einspeisen in das Energieversorgungsnetz zu ermöglichen. Die Gleichspannungs/Wechselspannungs-Brücke 3 erzeugt somit am ersten, zweiten und dritten Mittelpunkt M1, M2, M3 jeweils Rechteckspannungen. Durch die Filterung dieser Rechteckspannungen über Taktfilter TF und Netzfilter NF, bzw. über die Induktivitäten X1, X2, X3 werden jeweils sinusförmige Ausgangs-Wechselspannung uL1, uL2, uL3 erzeugt und weiter jeweils in die Netzspannungen U1, U2, U3 des Energieversorgungsnetzes 4 eingespeist wird. Vorzugsweise werden die Leistungsschalter S11+, S21+, S31+ S12+, S22+, S32+, S11-, S21+, S31-, S12-, S22-, S32- der Gleichspannungs/Wechselspannungs-Brücke 3 mit einer Frequenz größeren als der Netzfrequenz von 50 Hz, beispielsweise 20 kHz getaktet.

Da die Betriebsweise von Wechselrichtern 1 im Normalbetrieb hinlänglich bekannt ist, wird an dieser Stelle nicht näher darauf eingegangen.

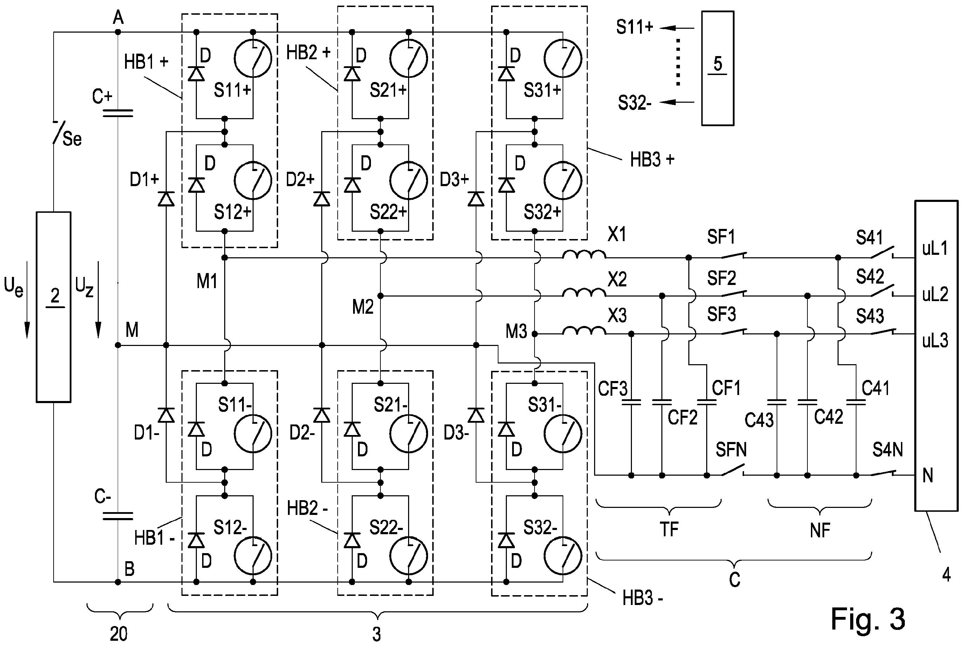

Bekanntermaßen müssen vor dem Normalbetrieb des Wechselrichters 1 die Zwischenkreiskondensatoren C+, C- des Zwischenkreises in einem Vorladebetrieb auf eine geeignete Zwischenkreisspannung Uz vorgeladen werden. Dies erfolgt erfindungsgemäß indem im Vorladebetrieb die Zwischenkreisspannung Uz über das Energieversorgungsnetz 4 auf eine Vorspannung Uv vorgeladen wird, wie in Fig. 3 beispielhaft gezeigt wird.

Dieser Vorladebetrieb kann in zwei Schritten ausgeführt werden, wobei in einem ersten Schritt die Zwischenkreisspannung Uz über das Energieversorgungsnetz 4 auf eine Schwellspannung Us, kleiner einer Vorspannung Uv, vorgeladen wird und anschließend in einem Hochsetzstellerbetrieb die Leistungsschalter S11+, S21+, S31+ S12+, S22+, S32+, S11-, S21+, S31-, S12-, S22-, S32- des Wechselrichters 1 entsprechend eines Hochsetzstellers getaktet werden bis die Zwischenkreisspannung Uz die vorgegebene Vorspannung Uv erreicht. Es ist jedoch auch möglich den ersten Schritt zu überspringen und die Zwischenkreisspannung rein im Hochsetzstellerbetrieb auf die Vorspannung Uv zu laden, ohne vorab eine Schwellspannung Us zu berücksichtigen, was somit auch als eine Schwellspannung Us von Null betrachtet werden kann.

Während des Vorladebetriebs kann die Gleichspannungsquelle 2 nicht mit dem Wechselrichter 1 verbunden sein, was in Fig. 3 durch einen geöffneten Eingangsschalter Se symbolisiert ist. Die Gleichspannungsquelle 2 könnte aber auch über einen geschlossenen Eingangsschalter Se mit dem Wechselrichter 1 verbunden sein. Falls die Eingangs-Gleichspannung Ue höher als die Vorspannung Uv wäre, so ist gar kein Vorladen erforderlich. Ist die die Eingangs-Gleichspannung Ue niedriger, so kann eine erfindungsgemäße Vorladung vorgenommen werden, wobei natürlich für die Vorladung eine geringere Zeit erforderlich ist, als wenn die Zwischenkreisspannung Uz von Null auf die Vorspannung Uv geladen werden müsste.

Der Vorladebetrieb kann mittels einer Schalterstellung, wie in Fig. 3 dargestellt erfolgen, wobei der ausgangsseitige Neutralleiter-Schalter S4N, sowie einer der ausgangsseitigen Phasen-Schalter, hier der dritte Phasen-Schalter S43, geschlossen werden. Die anderen Phasen-Schalter, also hier der erste Phasen-Schalter S41 und zweite Phasenschalter S42 werden geöffnet. Weiters werden die zwischen Netzfilter NF und Taktfilter TF befindlichen vorderen Phasen-Filterschalter SF1, SF2, SF3 geschlossen (sofern vorhanden), wobei jedoch der Neutralleiter-Filter-Schalter SFN geöffnet bleibt. In dieser Schalterstellung kann es zu keinem direkten Stromfluss über die parasitären Dioden der Leistungsschalter S11+, S21+, S31+ S12+, S22+, S32+, S11-, S21+, S31-, S12-, S22-, S32- kommen und es ergibt sich ein kapazitiver Spannungsteiler, der über die Netzfilterkondensatoren C41, C42, C43 und die Taktfilterkondensatoren CF1, CF2, gebildet wird. Im dritten Mittelpunkt M3, der ja über die dritte Induktivität X3 und die Dioden D der dritten oberen Halbbrücke HB3+ mit dem oberen Zwischenkreiskondensator C+ verbunden ist, liegt somit eine Sinusspannung an, die eine Frequenz entsprechend der Netzfrequenz f aufweist. Die Höhe dieser Sinusspannung am dritten Mittelpunkt M3 ist jedoch über den kapazitiven Spannungsteiler verringert und zudem zur Netzfrequenz phasenverschoben.

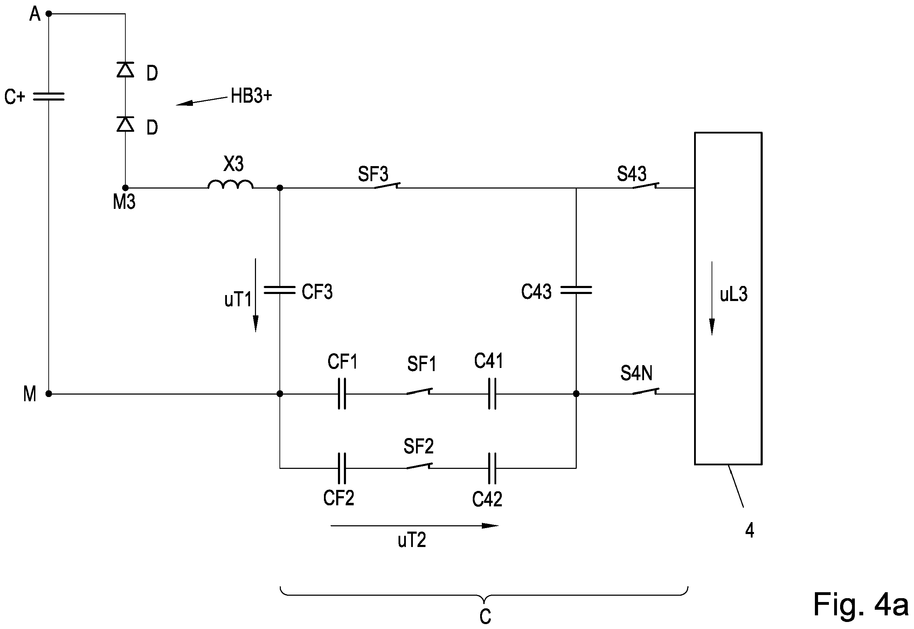

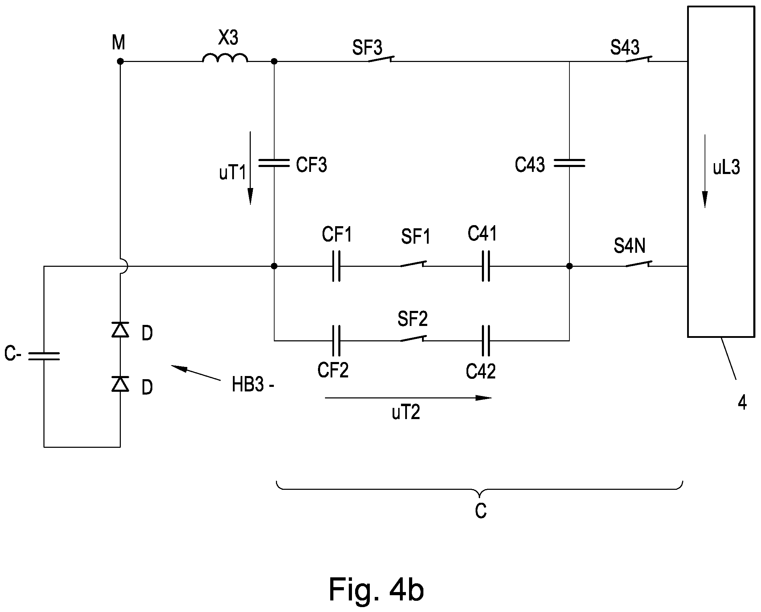

Um den kapazitiven Spannungsteiler zu beschreiben ist die Schaltung, die sich in den oben genannten Schalterstellungen im ersten Schritt für positive Halbwellen der Netzspannung U3 der gewählten Phase L3 effektiv ergibt, in Fig. 4a dargestellt, die Schaltung für negative Halbwellen der Netzspannung in Fig. 4b. In den Fig. 4a und 4b sind die offenen Leistungsschalter nicht eingezeichnet, dafür jedoch die parallelen Freilaufioden D, hier also die Freilaufdioden der dritten oberen Halbbrücke HB3+, bzw. der dritten unteren Halbbrücke HB3-, da die jeweiligen Halbleiterschalter S31+, S32+, bzw. S31-, S32- geöffnet sind. Es ist ersichtlich, dass der kapazitive Spannungsteiler die (hier dritte) Netzspannung U3, welche am dritten Netzfilterkondensator C43 anliegt auf eine erste Teilspannung uT1 und eine zweite Teilspannung uT2 aufteilt. Die erste Teilspannung uT1 liegt am dritten Taktfilterkondensator CF3 an, die zweite Teilspannung uT2 an einer Parallelschaltung zweier Zweige. Einer der Zweige ist aus einer Serienschaltung des ersten Taktfilterkondensator CF1 und dem ersten Netzfilterkondensator C41 gebildet und der andere Zweig aus einer Serienschaltung des zweiten Taktfilterkondensators FC1 und dem zweiten Netzfilterkondensator C42. Die erste Teilspannung uT1 liegt somit in der positiven Halbwelle über die dritte Spule X3 und die Freilaufdioden D der dritten oberen Halbbrücke HB3+ am oberen Zwischenkreiskondensator C+ an (Fig.4a). In der negativen Halbwelle liegt die erste Teilspannung uT1 über die dritte Spule X3 und die Freilaufdioden D der dritten unteren Halbbrücke HB3- am unteren Zwischenkreiskondensator C- an (Fig.4b). Es könnte natürlich auch nur einer der Zweige für den kapazitiven Spannungsteiler verwendet werden, was erreicht werden kann, dass der erste Phasen-Filterschalter SF1 oder der zweite Phasen-Filterschalter SF2 geöffnet ist. Dabei würde der verbleibende erste oder zweite Zweig jedoch einen höheren Widerstand aufweisen, womit der kapazitive Spannungsteiler verändert wird und die zweite Teilspannung uT2 größer und damit die erste Teilspannung uT1 kleiner wird.

Es entsteht ein kontinuierlicher Stromfluss in Richtung der Zwischenkreiskondensatoren C+, C-, wobei die Taktfilterkondensatoren CF1, CF2, CF3 strombegrenzend wirken. Die Höhe der sich einstellenden Zwischenkreisspannung Uz hängt von der Spannung an den Taktfilterkondensatoren CF1, CF2, CF3 ab, welche wiederum von der Kapazität der Taktfilterkondensatoren CF1, CF2, CF3 abhängt.

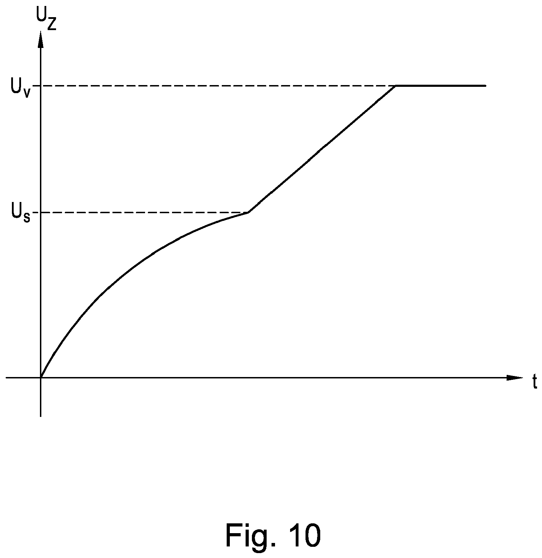

So kann die Zwischenkreisspannung Uz bis zu einer Schwellspannung Us vorgeladen werden, was aufgrund des kapazitiven Spannungsteilers nicht sprunghaft, sondern entsprechend einer Ladekurve erfolgt, wie sie in Fig. 10 dargestellt ist.

Die Schwellspannung Us kann einen Wert knapp unter der halben Scheitelspannung der Netzspannung U1, U2, U3 des Energieversorgungsnetzes 4 entsprechen. Bei einem Energieversorgungsnetz 4 mit einer Netzspannung U1, U2, U3 von 230 Volt ergibt sich für die Scheitelspannung 325 V, womit sich für die Schwellspannung Us als halbe Scheitelspannung 162,5 V ergeben. Da die theoretisch mögliche Schwellspannung Us üblicherweise, z.B. aufgrund von Verlusten, nicht erreicht werden kann, sollte die Schwellspannung Us etwas geringer als der maximal mögliche Wert, d.h. der halben Scheitelspannung gewählt werden, damit sichergestellt wird, dass die Schwellspannung Us erreicht werden und der Hochsetzstellerbetrieb sicher aktiviert werden kann.

Die Zwischenkreisspannung Uz für einen Wechselrichter 1 sollte um Schäden an den Bauteilen zu vermeiden vor Aktivierung des Normalbetriebs üblicherweise auf eine Vorspannung Uv, die mindestens der doppelte Scheitelspannung entspricht (also hier 650 V) geladen werden, was im Hochsetzstellerbetrieb erfolgt.

Wird der oben beschriebene erste Schritt ausgeführt, bis die Zwischenkreisspannung Uz eine Schwellspannung Us erreicht oder überschreitet, so kann der zweite Schritt eingeleitet werden. Wird der erste Schritt übersprungen, so kann, wie erwähnt, auch gleich mit dem Hochsetzstellerbetrieb begonnen werden.

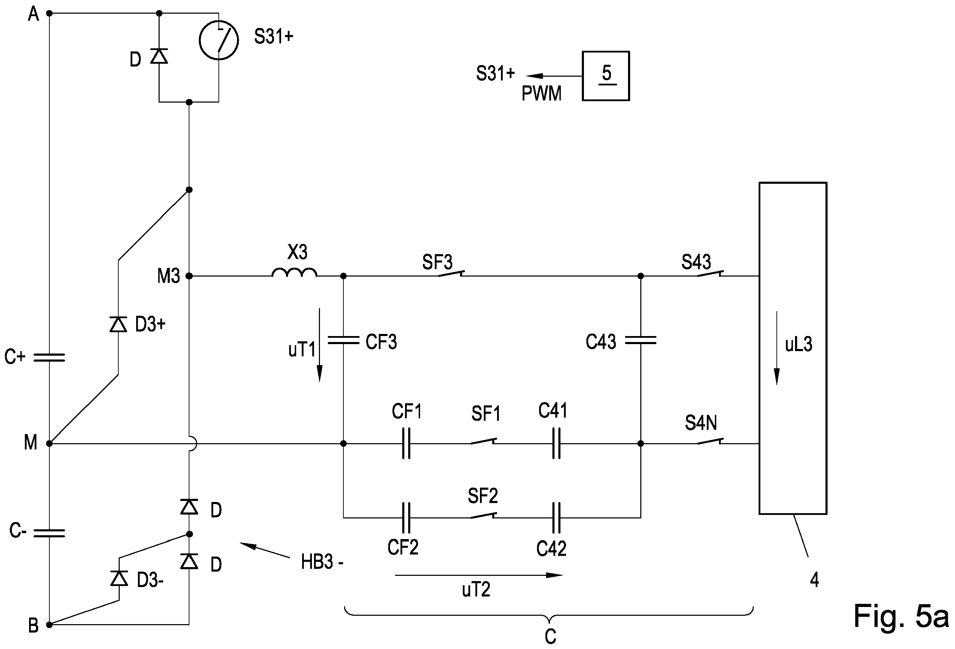

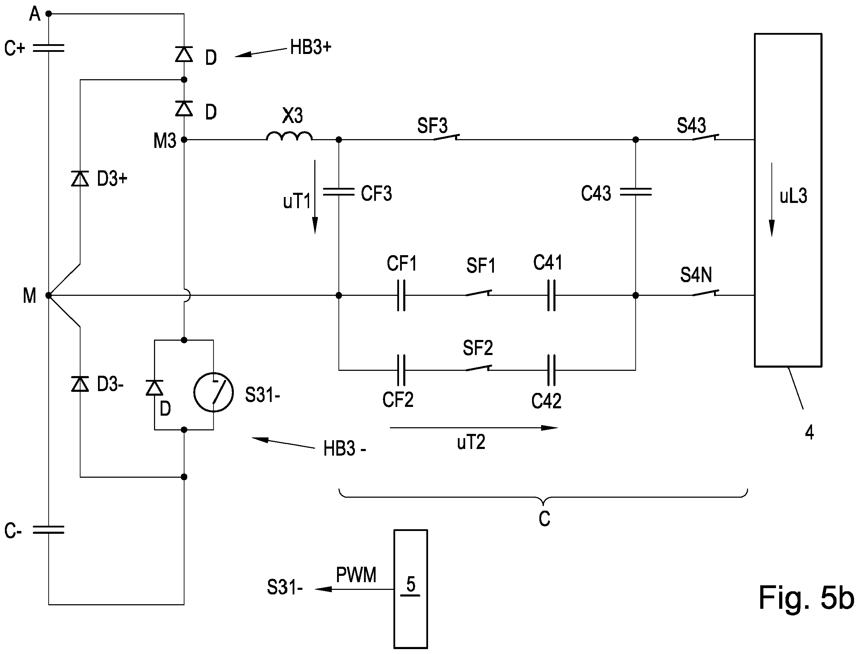

In diesem Hochsetzstellerbetrieb kann der Wechselrichter 1 mit einer Phase L1, L2, L3 des Energieversorgungsnetzes 4 verbunden wird, wobei Leistungsschalter S11+, S21+, S31+ S12+, S22+, S32+, S11-, S21+, S31-, S12-, S22-, S32- des Wechselrichters 1 entsprechend eines Hochsetzstellers getaktet werden bis die Zwischenkreisspannung die vorgegebene Vorspannung erreicht. Es wird der Spannungsverlauf einer Phase L1, L2, L3 betrachtet, und die Leistungsschalter S11+, S21+, S31+ S12+, S22+, S32+, S11-, S21+, S31-, S12-, S22-, S32- der der betrachteten Phase L1, L2, L3 zugehörigen Halbbrücke HB1+, HB2+, HB3+ HB1-, HB2-, HB3- entsprechend eines Hochsetzstellers synchron mit der Wechselspannung uL1, uL2, uL3 an der gewählten Phase L1, L2, L3 getaktet, wie in Fig. 5a und 5b an der Steuereinheit 5 angedeutet. Es ist in Fig.5a die Schaltung, die sich in den oben genannten Schalterstellungen im Hochsetzstellerbetrieb für positive Halbwellen der Netzspannung effektiv ergibt, und in Fig. 5b die Schaltung für negative Halbwellen der Netzspannung.

Im dargestellten Ausführungsbeispiel wird der Spannungsverlauf der dritten Phase L3 betrachtet, da diese bereits im ersten Schritt über den dritten Phasen-Schalter S43, verbunden war. Damit bleiben die Phasen-Filter-Schalter SF1, SF2, SF3, Neutralleiter-Filter-Schalter SFN, Phasen- Schalter S41, S42, S43, und Neutralleiter- Schalter S4N in derselben Stellung wie im ersten Schritt, d.h. der Neutralleiter-Schalter S4N, sowie einer der ausgangsseitigen Phasen-Schalter, hier der dritte Phasen-Schalter S43, und Phasen-Filter-Schalter SF1, SF2, SF3 bleiben geschlossen und der Neutralleiter-Filter-Schalter SFN, sowie die der erste Phasen-Schalter S41 und der zweite Phasenschalter S 42 bleiben geöffnet.

So kann die Schalterstellung aus Fig. 3 auch für den zweiten Schritt beibehalten werden. Würde im zweiten Schritt die erste Phase L1 verwendet werden, so müsste natürlich der erste Phasen-Schalter S41 geschlossen und der zweite Phasen-Schalter S42, sowie der dritte Phasen-Schalter S43 geöffnet werden, würde im zweiten Schritt die zweite Phase L2 verwendet werden, so müsste der zweite Phasen-Schalter S42 geschlossen und der erste Phasen-Schalter S41, sowie der dritte Phasen-Schalter S43 geöffnet werden. Die Leistungsschalter S31, S32+ der oberen dritten Halbbrücke HB3+ und die Leistungsschalter S31-, S32- dritten unteren Halbbrücke HB3- entsprechend getaktet.

In den Figuren 5a und 5b sind offene Leistungsschalter nicht eingezeichnet, dafür jedoch die parallelen Freilaufioden D. Geschlossene Leistungsschalter sind ebenso nicht eingezeichnet, ebenso nicht die parallelen Freilaufdioden da diese durch die geschlossenen Leistungsschalter kurzgeschlossen sind. Die eingezeichneten Leistungsschalter werden in Fig. 5a und Fig. 5b jeweils mit einer PWM getaktet.

Der Taktvorgang beginnt während eines Spannungsnulldurchgangs der gewählten Phase, hier also der dritten Phase L3. Dabei wird in der positiven Halbwelle der dritten Phasenspannung UL3 an der dritten Phase L3 der untere Halbleiterschalter S32+ der dritten oberen Halbbrücke HB3+ eingeschaltet (in Fig. 5a daher nicht eingezeichnet), entsprechend der untere Halbleiterschalter S32- und der obere Halbleiterschalter S31- der dritten unteren Halbbrücke HB3- ausgeschaltet (in Fig. 5a ist daher nur die parallele Freilaufdiode D eingezeichnet) und der obere Halbleiterschalter S31+ der oberen Halbbrücke HB3+ wird von der Steuereinheit 5 mit einem PWM-Signal PWM mit einem gewissen Puls-Pause-Verhältnis getaktet, wobei die Taktfrequenz des PWM-Signals PWM zum Beispiel 20 kHz ist. Die Frequenz des aus dem PWM-Signal resultierenden Signals kann vom der aktuellen Phasenspannung der zugehörigen Phase des Energieversorgungsnetz abgeleitet werden. Der obere Halbleiterschalter S31- der dritten unteren Halbbrücke HB3- könnte jedoch auch nicht ausgeschaltet, sondern invers zum oberen Halbleiterschalter S31+ der oberen Halbbrücke HB3+ getaktet werden.

In der negativen Halbwelle der dritten Phasenspannung UL3 werden der untere Halbleiterschalter S32+ und der obere Halbleiterschalter S31+ der dritten oberen Halbbrücke HB3+ ausgeschaltet (in Fig. 5b ist daher nur die parallele Freilaufdiode D eingezeichnet), der untere Halbleiterschalter S32- der unteren dritten Halbbrücke HB3- eingeschaltet (in Fig. 5b daher nicht eingezeichnet) und der obere Halbleiterschalter S31- der unteren dritten Halbbrücke HB3- ebenso von der Steuereinheit 5 mit einem PWM-Signal PWM mit einem Puls-Pause-Verhältnis hochfrequent getaktet, wobei die Frequenz wiederum vom aktuellen Wert der zugehörigen dritten Phasenspannung U3 abgeleitet werden kann. Der obere Halbleiterschalter S31+ der dritten oberen Halbbrücke HB3+ muss nicht ausgeschaltet sein, sondern kann auch invers zum unteren Halbleiterschalter S31- der oberen Halbbrücke HB3+ getaktet werden.

Es werden die Leistungsschalter S31+ S31- also mit der am dritten Mittelpunkt M3 anliegenden Sinusspannung synchronisiert getaktet, womit am dritten Mittelpunkt M3 eine Rechteckspannung erzeugt wird. Der Stromfluss in den Zwischenkreis kann über den Tastgrad der PWM reguliert werden, wobei der Tastgrad aus der Amplitude der Spannung am dritten Mittelpunkt M3 abgeleitet werden kann, wobei ein passender Skalierungsfaktor zur Amplitude gewählt wird. Durch diesen Hochsetzstellerbetrieb wird ein sich selbst stabilisierender Regelkreis erzeugt. Es ist erforderlich, dass der in den Zwischenkreis fließende Strom nicht höher ist, als der über den kapazitiven Spannungsteiler nachfließende Strom, da ansonsten die Spannung am dritten Mittelpunkt M3 zusammenbrechen würde. So wird der Tastgrad automatisch reduziert, wenn die Spannung am dritten Mittelpunkt 3 kleiner wird bzw. erhöht, wenn diese steigt. Der Skalierungsfaktor entspricht regelungstechnisch einem P Anteil und begrenzt den Maximalstrom. Durch das beschriebene Schaltmuster verhält sich die Gleichspannungs/Wechselspannungs-Brücke 3 wie ein Hochsetzsteller und es wird kontrolliert Energie vom Versorgungsnetz 4, bzw. von der Netzspannung U3 der gewählten Phase, hier der dritten Phase L3, aufgenommen und in die Zwischenkreiskondensatoren C+, C- geladen, was einen weiteren Anstieg der Zwischenkreisspannung Uz zur Folge hat.

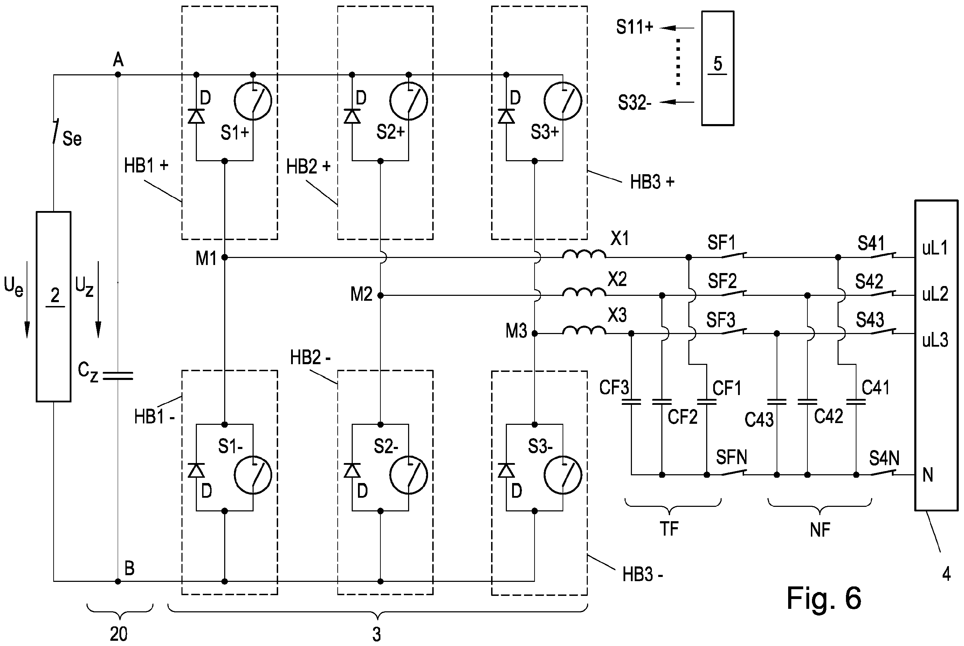

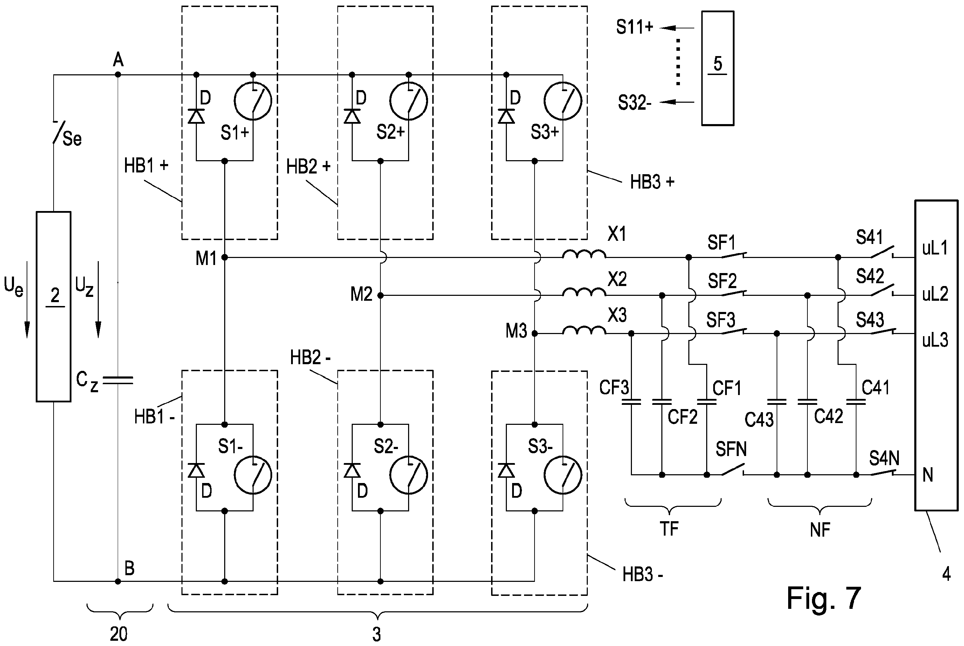

Das beschriebene Verfahren kann natürlich nicht nur, wie anhand des oben dargestellten ersten Ausführungsbeispiel in einem Wechselrichter 1 mit zwei Zwischenkreiskondensatoren C+, C- und abgegriffenem Mittelpunkt M verwendet werden, sondern in analoger Weise z.B. auch für einen Wechselrichter 1 mit nur einem Zwischenkreiskondensator Cz im Zwischenkreis Z. Ein derartiger Wechselrichter 1 ist hier als zweites Ausführungsbeispiel als B6-Brücken-Wechselrichter dargestellt, wobei Fig. 6 den Normalbetrieb und Fig. 7 den Vorladebetrieb zeigt. Der Zwischenkreis Z kann auch hier natürlich mehrere Zwischenkreiskondensatoren Cz aufweisen, es wird jedoch kein Mittelpunkt M abgegriffen.

Der erste Pol A ist wie in ersten Ausführungsbeispiel jeweils über die obere Halbbrücke HB1+, HB2+, HB3+ und die in Serie geschaltete zugehörige untere Halbbrücke HB1-, HB2-, HB3- mit dem zweiten Pol B verbunden, womit die Zwischenkreisspannung Uz jeweils an der Serienschaltung der oberen Halbbrücken HB1+, HB2+, HB3+ und zugehörigen untere Halbbrücken HB1-, HB2-, HB3-jeder Phase n anliegt. Zwischen den oberen Halbbrücken HB1+, HB2+, HB3+ und zugehörigen unteren Halbbrücken HB1-, HB2-, HB3- befinden sich ebenso der erste, zweite, bzw. dritte Mittelpunkt M1, M2, M3. Die oberen Halbbrücken HB1+, HB2+, HB3+ umfassen im zweiten Ausführungsbeispiel Wechselrichter 1 je nur einen Leistungsschalter S1+, S2+, S3+ mit parallelen Freilaufdioden D, die in Richtung des ersten Pols A durchlässig gepolt. Es gibt hier also keine in Serie geschalteten unteren Leistungsschalter S12+, S22+, S32+ und damit keine oberen Mittelpunkte M1+, M2+, M3+.

Da der Neutralleiter mit keinem Mittelpunkt M verbunden wird, und keine oberen Mittelpunkten M1+, M2+, M3+ vorhanden sind, sind auch keine oberen Dioden D1+, D2+, D3+ und untere Dioden D1-, D2-, D3- vorgesehen.

Die unteren Halbbrücken HB1-, HB2-, HB3- umfassen in analoger Weise einen Leistungsschalter S1-, S2-, S3- mit parallel dazu angeordneten Freilaufdioden D, die in Richtung des zugehörigen ersten, zweiten, bzw. dritten Mittelpunkts M1, M2, M3 durchlässig gepolt sind. Es gibt hier ebenso keine unteren Mittelpunkte M1-, M2-, M3- und keine unteren Dioden D1-, D2-, D3-.

Im Normalbetrieb nach Fig. 6 ist der Eingangsschalter Se geschlossen. Die Gleichspannungsquelle 2 erzeugt eine Eingangs-Gleichspannung Ue zwischen dem ersten Pol A und dem zweiten Pol B, womit die Eingangs-Gleichspannung Ue der Zwischenkreisspannung Uz entspricht. Die Phasen-Filterschalter SF1, SF2, SF3, bzw. der Neutralleiter-Filterschalter SFN, die Phasen-Schalter S41, S42, S43, bzw. Neutralleiter-Schalter S4N sind geschlossen, womit die Gleichspannungs/Wechselspannungs-Brücke 3 mit dem Energieversorgungsnetz 4 verbunden ist. Eine Eingangs-Gleichspannung Ue entspricht im Normalbetrieb der Zwischenkreisspannung Uz und liegt zwischen dem ersten Pol A und dem zweiten Pol B an. Die Steuerschaltung 5 schaltet die oberen Halbbrücken HB1+, HB2+, HB3+ derart, dass am ersten, zweiten und dritten Mittelpunkt M1, M2, M3 jeweils positive Halbwellen erzeugt werden. Die Steuerschaltung 5 schaltet in analoger Weise die unteren Halbbrücken HB1-, HB2-, HB3- derart, dass am ersten, zweiten und dritten Mittelpunkt M1, M2, M3 jeweils negative Halbwellen erzeugt werden. Dabei werden obere Halbbrücken HB1+, HB2+, HB3+ und zugehörige unteren Halbbrücken HB1-, HB2-, HB3-jeweils abwechselnd geschaltet. Die Betriebsweise im Normalbetrieb erfolgt grundlegend also wie in ersten Ausführungsbeispiel.

Die Vorladung des Zwischenkreiskondensators Cz auf eine Vorspannung Uv erfolgt ebenso grundlegend wie im ersten Ausführungsbeispiel im Vorladebetrieb, welcher wiederum in zwei Schritten ausgeführt werden kann. Im ersten Schritt wird die Zwischenkreisspannung Uz über das Energieversorgungsnetz 4 auf eine Schwellspannung Us, kleiner der Vorspannung Uv, vorgeladen und anschließend in einem Hochsetzstellerbetrieb die (hier nur sechs) Leistungsschalter S1+, S2+, S3+ S1-, S2-, S3- des Wechselrichters 1 entsprechend eines Hochsetzstellers getaktet werden, bis die Zwischenkreisspannung Uz die vorgegebene Vorspannung Uv erreicht. Es ist jedoch auch möglich den ersten Schritt zu überspringen und die Zwischenkreisspannung rein im Hochsetzstellerbetrieb auf die Vorspannung Uv zu laden, ohne vorab eine Schwellspannung Us zu berücksichtigen.

Während des Vorladebetriebs kann die Gleichspannungsquelle 2 wie im ersten Ausführungsbeispiel mit dem Wechselrichter verbunden sein, oder auch getrennt sein, wie in Fig. 7 durch einen geöffneten Eingangsschalter Se symbolisiert.

Der Vorladebetrieb des zweiten Ausführungsbeispiel kann mit derselben Stellung der Phasen-Filterschalter SF1, SF2, SF3, bzw. des Neutralleiter-Filterschalter SFN und der Phasen-Schalter S41, S42, S43, bzw. des Neutralleiter-Schalters S4N, wie im ersten Ausführungsbeispiel, um einen kapazitiven Spannungsteiler zu bilden.

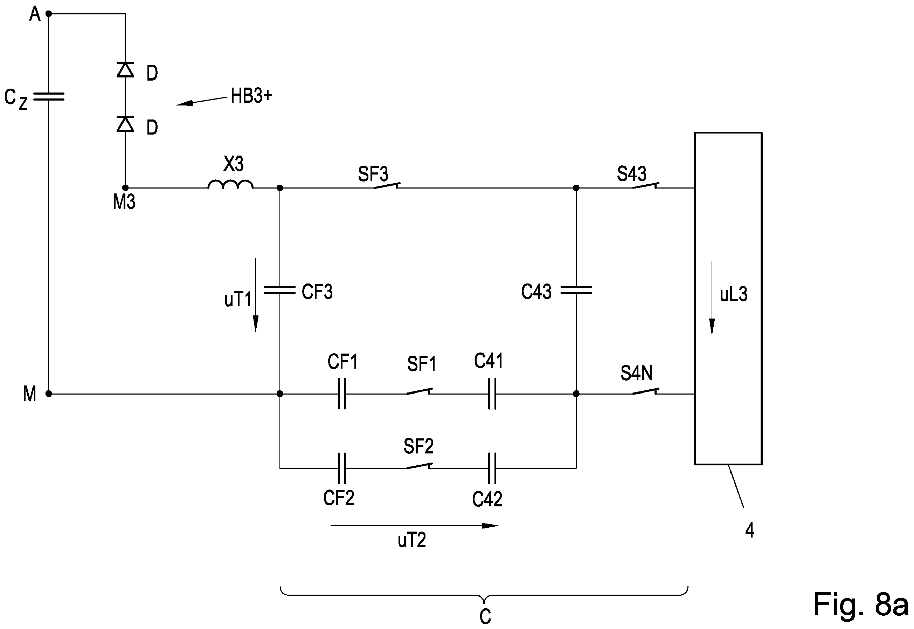

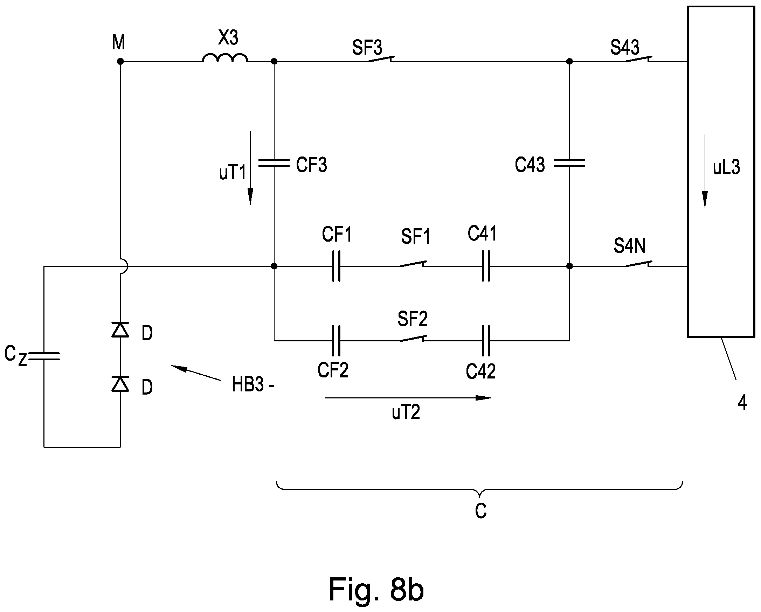

Der kapazitive Spannungsteiler ergibt sich für positive Halbwellen der Netzspannung wie in Fig. 8a dargestellt und für negative Halbwellen wie in Fig. 8b dargestellt. So kann analog die Zwischenkreisspannung Uz zum ersten Ausführungsbeispiel bis zur Schwellspannung Us vorgeladen werden.

Wird der erste Schritt ausgeführt, bis die Zwischenkreisspannung Uz eine Schwellspannung Us erreicht oder überschreitet, so kann der zweite Schritt eingeleitet werden. Wird der erste Schritt übersprungen, so kann auch gleich mit dem Hochsetzstellerbetrieb begonnen werden.

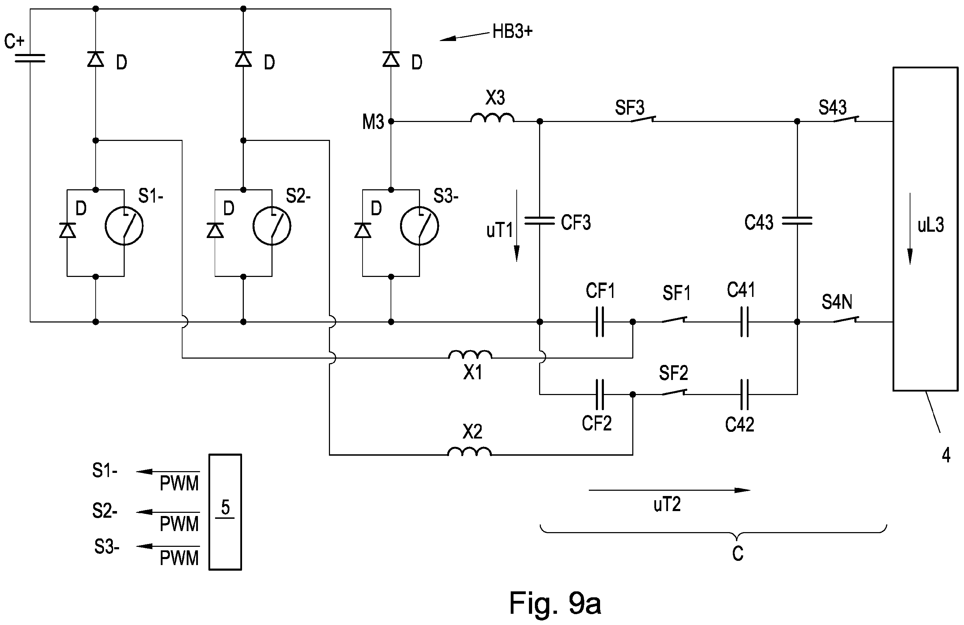

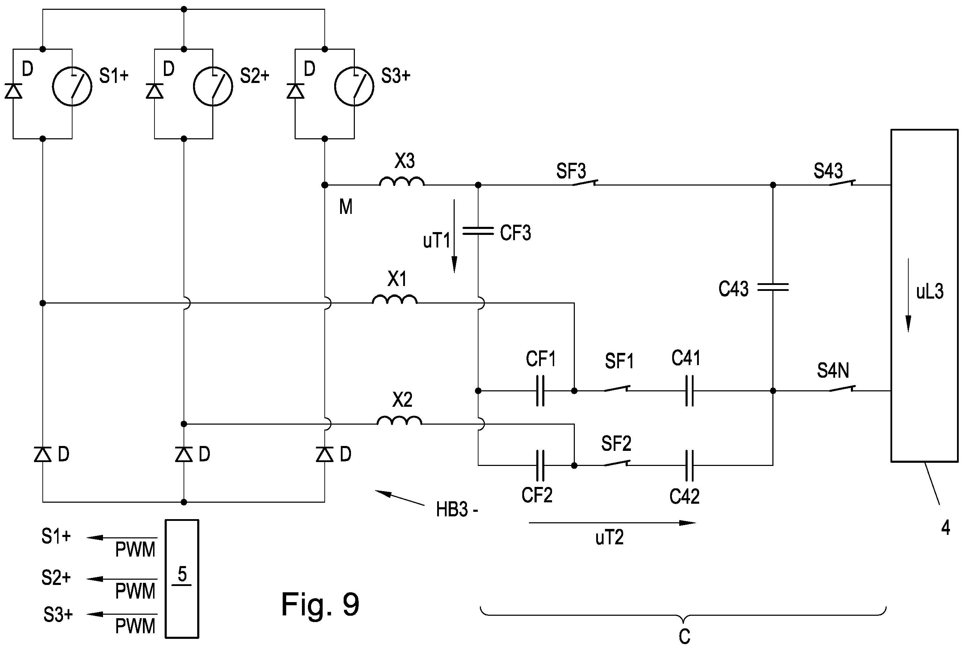

In diesem Hochsetzstellerbetrieb kann der Wechselrichter 1 mit einer Phase L1, L2, L3 des Energieversorgungsnetzes 4 verbunden werden. Hier takten jedoch im Gegensatz zum ersten Ausführungsbeispiel die Leistungsschalter S1-, S2+, S3+ aller oberen Halbbrücken HB1+, HB2+, HB3+ entsprechend eines Hochsetzstellers synchron mit der Netzspannung der gewählten Phase, also hier der dritten Netzspannung U3 der dritten Phase L3, bis die Zwischenkreisspannung Uz die vorgegebene Vorspannung Uv erreicht. In den Fig. 9a und 9b sind offene Leistungsschalter nicht eingezeichnet, dafür jedoch die parallelen Freilaufioden D. Die jeweiligen eingezeichneten Leistungsschalter werden in Fig. 9a und Fig. b jeweils mit einer PWM getaktet.

Während der oberen Halbwelle können die Leistungsschalter S1-, S2-, S3- der unteren Halbbrücken HB1-, HB2-, HB3- gegen die Leistungsschalter S1+, S2+, S3+ aller oberen Halbbrücken HB1+, HB2+, HB3+ gegengetaktet, oder geöffnet werden - letzteres in Fig. 9a dadurch dargestellt, dass nur parallelen Freilaufdioden D eingezeichnet sind. In der negativen Halbwelle der dritten Phasenspannung UL3 werden die Halbleiterschalter S1-, S2-, S3-der unteren Halbbrücken HB1-, HB2-, HB3- entsprechend einer PWM getaktet und die Leistungsschalter S1+, S2+, S3+ aller oberen Halbbrücken HB1+, HB2+, HB3+ gegen die Leistungsschalter S1-, S2-, S3- der unteren Halbbrücken HB1-, HB2-, HB3- gegengetaktet oder geöffnet werden - letzteres in Fig. 9b dadurch dargestellt, dass nur parallelen Freilaufdioden D eingezeichnet sind.

Es wird hier beispielhaft die Schalterstellung aus Fig. 6 auch für den Hochsetzstellerbetrieb beibehalten. Würde im zweiten Schritt die erste Phase L1 verwendet werden, so müsste natürlich der erste Phasen-Schalter S41 geschlossen und der zweite Phasen-Schalter S42, sowie der dritte Phasen-Schalter S43 geöffnet werden, würde im zweiten Schritt die zweite Phase L2 verwendet werden, so müsste der zweite Phasen-Schalter S42 geschlossen und der erste Phasen-Schalter S41, sowie der dritte Phasen-Schalter S43 geöffnet werden.

Für alle Ausführungsformen wird im Hochsetzstellerbetrieb die Gleichspannungs/Wechselspannungs-Brücke 3 wie ein Hochsetzsteller getaktet. Da die Funktion eines Hochsetzstellers bekannt ist, wird an dieser Stelle nicht näher auf diese Funktionsweise eingegangen. Es wird somit kontrolliert Energie vom Versorgungsnetz 4, bzw. von der Netzspannung U3 der gewählten Phase, hier der dritten Phase L3, aufgenommen und in die Zwischenkreiskondensatoren Cz, C+, C- geladen, was einen weiteren Anstieg der Zwischenkreisspannung Uz zur Folge hat.

Die anliegende Zwischenkreisspannung Uz wird mit einer vorgegebenen Vorspannung Uv verglichen. Erreicht oder überschreitet die Zwischenkreisspannung Uz die Vorspannung Uv, so wird der oben dargestellte Hochsetzstell-Taktvorgang beendet und der Wechselrichter 3 mit dem Energieversorgungsnetz 4 verbunden. Dies erfolgt in üblicher Weise, indem die Phasen-Filterschalter SF1, SF2, SF3, der Neutralleiter-Filterschalter SFN, die Phasen-Schalter L41, L42, L43 und die Neutralleiter-Schalter L4N geschlossen werden, wie in Fig. 2 bzw. Fig. 6 dargestellt. Weiters kann zu Beginn des Normalbetriebs in üblicher Weise mit einer Synchronisierung der Steuereinheit 5 mit dem Energieversorgungsnetz 4 erfolgen und daraufhin mit der Wandlung der von der Gleichspannungsquelle 4 zur Verfügung gestellten Eingangs-Gleichspannung Ue in die Ausgangs-Wechselspannung uL1, uL2, uL3 und der Einspeisung in das Energieversorgungsnetz 4 begonnen werden.

Fig. 10 zeigt den Verlauf der Zwischenkreisspannung Uz, welche in einem ersten Schritt bis zur Schwellspannung Us vorgeladen und anschließend im Hochsetzstellerbetrieb bis zum Vorspannung Uv weiter geladen wird.

Der im dargestellten Ausführungsbeispiel gezeigte Wechselrichter 1 ist für ein Energieversorgungsnetz 4 mit n=3 Phasen L1, L2, L3 ausgelegt. Selbstverständlich auch Energieversorgungsnetze 4 mit einer anderen Anzahl n an Phasen über einen erfindungsgemäßen Wechselrichter 1 mit einer Eingangs-Gleichspannung Ue verbunden werden und das erfindungsgemäße Verfahren angewendet werden.

## Patentansprüche

1. Verfahren zum Betreiben eines Wechselrichters (1), welcher einen Zwischenkreis (3), eine Gleichspannungs/Wechselspannungs-Brücke (3) und eine Steuereinheit (5) umfasst, wobei von der Steuereinheit (5) Halbbrücken (HB1+, HB2+, HB3+, HB1-, HB2-, HB3-) der Gleichspannungs/Wechselspannungs-Brücke (3) angesteuert werden um in einem Normalbetrieb eine Eingangs-Gleichspannung (Ue) einer Gleichspannungs-Eingangsstufe (20) über den Zwischenkreis (Z) und die Gleichspannungs/Wechselspannungs-Brücke (3) in eine an einem Ausgang anliegende Ausgangs-Wechselspannung (uL1, uL2, uL3) zu wandeln, wobei der Wechselrichter (1) vor einer Aktivierung des Normalbetriebs in einen Vorladebetrieb geschaltet wird, bei dem eine Zwischenkreisspannung (Uz) des Zwischenkreises (Z) auf eine vorgegebene Vorspannung (Uv) vorgeladen wird, **dadurch gekennzeichnet, dass** im Vorladebetrieb die Zwischenkreisspannung (Uz) über eine kapazitive Schaltung (C), vorzugsweise einen kapazitiven Spannungsteiler, über ein mit dem Ausgang verbundenes Energieversorgungsnetz (4) vorgeladen wird.

2. Verfahren nach Anspruch 1, **dadurch gekennzeichnet, dass** ausgangsseitige Taktfilter (TF) und Netzfilter (NF) als kapazitive Schaltung (TF, NF) dienen.

3. Verfahren nach Anspruch 1 oder 2, **dadurch gekennzeichnet, dass** die Zwischenkreisspannung (Uz) in einem ersten Schritt über die kapazitive Schaltung über das Energieversorgungsnetz (4) auf eine Schwellspannung (Us) kleiner der Vorspannung (Uv) vorgeladen wird **und dass** anschließend in einem Hochsetzstellerbetrieb Halbbrücken (HB1+, HB2+, HB3+, HB1-, HB2-, HB3-) der Gleichspannungs/Wechselspannungs-Brücke (3) von der Steuereinheit (5) entsprechend eines Hochsetzstellers getaktet werden um die Zwischenkreisspannung (Uz) über das Energieversorgungsnetz (4) weiter zu erhöhen, bis die vorgegebene Vorspannung (Uv) erreicht wird.

4. Verfahren nach Anspruch 3, **dadurch gekennzeichnet, dass** die Zwischenkreisspannung (Uz) über die kapazitive Schaltung (C) über eine Phase (L1, L2, L3) des Energieversorgungsnetz (4) vorgeladen wird **und dass** die Zwischenkreisspannung (Uz) über die kapazitive Schaltung (C) über eine Phase (L1, L2, L3) des Energieversorgungsnetz (4) weiter erhöht wird.

5. Verfahren nach Anspruch 3, **dadurch gekennzeichnet, dass** die Zwischenkreisspannung (Uz) über dieselbe Phase (L1, L2, L3) auf die Schwellspannung (Us) vorgeladen und auf die Vorspannung (Uv) weiter erhöht wird.

6. Verfahren nach Anspruch 3 oder 5, **dadurch gekennzeichnet, dass** die Schwellspannung (Us) einem Wert knapp unter einer halben Scheitelspannung der Netzspannung (U1, U2, U3) des Energieversorgungsnetzes (4) entspricht.

7. Verfahren nach Anspruch 1 oder 2, **dadurch gekennzeichnet, dass** in einem Hochsetzstellerbetrieb Halbbrücken (HB1+, HB2+, HB3+, HB1-, HB2-, HB3-) der Gleichspannungs/Wechselspannungs-Brücke (3) von der Steuereinheit (5) entsprechend eines Hochsetzstellers getaktet werden um die Zwischenkreisspannung (Uz) über das Energieversorgungsnetz (4) auf die vorgegebene Vorspannung (Uv) vorzuladen.

8. Wechselrichter (1) umfassend einen Zwischenkreis (Z), eine Gleichspannungs/Wechselspannungs-Brücke (3) und eine Steuereinheit (5), wobei die Steuereinheit (5) ausgestaltet ist Halbbrücken (HB1+, HB2+, HB3+, HB1-, HB2-, HB3-) der Gleichspannungs/Wechselspannungs-Brücke (3) anzusteuern um in einem Normalbetrieb eine Eingangs-Gleichspannung (Ue) einer Gleichspannungs-Eingangsstufe (20) über den Zwischenkreis (Z) und die Gleichspannungs/Wechselspannungs-Brücke (3) in eine Ausgangs-Wechselspannung (uL1, uL2, uL3) zu wandeln, **dadurch gekennzeichnet, dass** eine kapazitive Schaltung (C), vorzugsweise ein kapazitiver Spannungsteiler, vorgesehen ist, über die der Zwischenkreis (Z) in einem Vorladebetrieb mit einem mit dem Ausgang verbundenes Energieversorgungsnetz (4) verbindbar ist, um eine Zwischenkreisspannung (Uz) des Zwischenkreises (Z) vorzuladen.
